# FASCICULE DE BREVET EUROPEEN

(11) **EP 2 864 201 B1**
(45) Date de publication et mention de la délivrance du brevet: **31.07.2019**
(21) Numéro de dépôt: 13729771.9
(22) Date de dépôt: 20.06.2013
(51) Int. Cl.: B64D 31/00, B64D 47/00, H02H 3/02, H03K 19/007

(54) **CIRCUIT ELECTRIQUE DE COUPURE D'UNE ALIMENTATION ELECTRIQUE A TRANSISTORS ET FUSIBLES A LOGIQUE REDONDEE**
ELEKTRISCHE SCHALTUNG ZUM ABSCHALTEN EINER ELEKTRISCHEN STROMVERSORGUNG MIT TRANSISTOREN UND SCHMELZSICHERUNGEN MIT REDUNDANTER LOGIK
ELECTRIC CIRCUIT FOR CUTTING OFF AN ELECTRIC POWER SUPPLY COMPRISING TRANSISTORS AND FUSES HAVING REDUNDANT LOGIC

(30) Priorité: 21.06.2012 FR 1255873
(43) Date de publication de la demande: 29.04.2015
(73) Titulaire: Safran Electronics & Defense, 92100 Boulogne-Billancourt (FR)
(72) Inventeur: VALETTE, Patrick, F-92100 Boulogne-Billancourt (FR); GUILLOT, François, F-92100 Boulogne-Billancourt (FR)
(74) Mandataire: Regimbeau
(86) Numéro de dépôt international: PCT/EP2013/062891
(87) Numéro de publication internationale: WO 2013/190044

(56) Documents cités:
- WO-A2-2008/113337
- WO-A2-2011/157834

## Description

### DOMAINE TECHNIQUE GENERAL

L'invention concerne le domaine de la sécurité de la commande de systèmes ou d'équipements, notamment électroniques et notamment ceux embarqués à bord d'un aéronef.

### ETAT DE LA TECHNIQUE

Un système électrique peut être commandé après qu'une condition est vérifiée.

Une solution connue est de connecter l'alimentation du système électrique à un circuit électrique configuré pour tester des signaux discrets indiquant qu'une condition est vérifiée.

Par exemple, dans le cas d'un aéronef, certains équipements électriques doivent être coupés en vol, par exemple dans le cas d'un système d'acquisition, de traitement et de communication de données avioniques, le module radio de transmission sans fil doit être coupé pour ne pas perturber le fonctionnement de l'aéronef.

Au moyen de portes logiques ET (en anglais, « AND ») connectées à des interrupteurs il est possible simplement de couper l'alimentation du module radio si nécessaire.

Une telle solution n'est toutefois pas satisfaisante lorsque des niveaux de sécurité (en anglais, « *safety* ») particulièrement élevés sont requis. Par exemple, les niveaux de fiabilité requis pour l'alimentation des équipements électriques présentant un risque catastrophique sont de l'ordre de 10⁻⁹.risque d'émettre par heure de vol.

### PRESENTATION DE L'INVENTION

L'invention propose de pallier au moins un de ces inconvénients.

A cet effet, l'invention propose un circuit électrique adapté pour couper une alimentation électrique d'un équipement électrique, le circuit comprenant une source de tension d'alimentation de l'équipement électrique, et ayant en outre pour entrées au moins deux signaux électriques discrets dont les valeurs conditionnent la coupure de l'alimentation électrique de l'équipement,
le circuit électrique étant caractérisé en ce qu'il comprend :
- au moins deux modules de coupure de l'alimentation électrique montés en série, connectés entre la source de tension et l'équipement électrique, chaque module de coupure de l'alimentation électrique étant commandé en fonction des valeurs des signaux électriques discrets, et
- au moins deux modules de comparaisons des signaux électriques discrets en parallèle,
dans lequel au moins un des modules de coupure de l'alimentation électrique est commandé par les sorties des modules de comparaisons des signaux discrets.

L'invention est avantageusement complétée par les caractéristiques suivantes, prises seules ou en une quelconque de leur combinaison techniquement possible :
- le module de coupure de l'alimentation électrique commandé par les sorties des modules de comparaisons des signaux discrets est adapté pour générer un court-circuit en cas de divergence entre les signaux issus des modules de comparaisons des signaux électriques discrets ;
- il comprend au moins un fusible pour en cas de court-circuit isoler la source de tension des éléments du circuit ;
- les modules de coupure de l'alimentation électrique présentent des structures électroniques différentes ;
- il comprend trois paires d'interrupteurs successives, chaque paire d'interrupteurs comprenant deux interrupteurs montés en série, chaque paire d'interrupteurs étant montée en parallèle entre la sortie du premier interrupteur de la paire en amont et la masse, et dans lequel les interrupteurs de chaque paire sont commandés par une fonction d'un signal électrique discret, et fonctionnent de manière opposée l'un par rapport à l'autre en fonction de la commande ;
- les paires d'interrupteurs sont adaptées pour provoquer un court-circuit dès lors qu'un interrupteur d'au moins une paire présente une défaillance en mode « conducteur permanent » ;
- le module de coupure de l'alimentation électrique commandé par les sorties des modules de comparaisons des signaux discrets comprend trois interrupteurs montés en parallèle entre la source de tension et la masse, chaque interrupteur étant commandé par une fonction logique des signaux électriques de sortie des modules de comparaisons des signaux électriques discrets ;
- la fonction logique des signaux électriques de sortie des modules de comparaisons des signaux électriques discrets est une fonction logique OU ;
- les modules de comparaisons des signaux électriques discrets présentent des structures électroniques différentes, adaptées pour mettre en oeuvre la fonction logique OU exclusif sur les valeurs des signaux électriques discrets en entrée, la fonction logique OU exclusif étant de préférence réalisée en logique négative ou positive.

L'invention concerne également un système d'acquisition, de traitement et de communication de données avioniques comprenant un circuit électrique selon l'invention.

Le circuit de l'invention comportant plusieurs composants le niveau de sécurité du circuit est de l'ordre de 10⁻⁹ risque d'alimenter l'équipement par heure de vol. En outre, en utilisant plusieurs étages qui peuvent interagir en fonction de leur état on s'assure que le circuit est robuste aux pannes qui peuvent affecter les composants tout en permettant d'alimenter l'équipement électrique seulement dans les cas où il doit l'être. Les niveaux de sécurité mis en série font qu'il faut une somme de conditions successives pour qu'on aboutisse à la mise sous tension non voulue de l'équipement : panne simultanée des modules de coupure, panne simultanée des modules de comparaison.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un système d'acquisition, de traitement et de communication de données avioniques conformes à un mode de réalisation de l'invention ;
- la figure 2 illustre un schéma de principe d'un circuit électrique conforme à un mode de réalisation de l'invention,
- la figure 3 illustre un schéma d'un circuit électrique conforme à un mode de réalisation de l'invention.

### DESCRIPTION DETAILLEE DE L'INVENTION

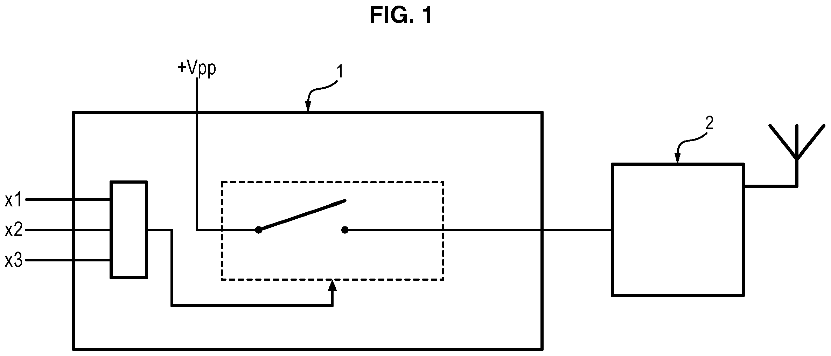

En relation avec la figure 1, un système d'acquisition, de traitement et de communication de données avioniques comprend :
- une unité d'acquisition (non représentée) de signaux électriques discrets x1, x2, x3 indiquant un état de l'aéronef ;
- un module 2 radio adapté pour transférer les données avioniques du système vers une station distante ;
- une source de tension +Vpp d'alimentation du module 2 radio, et
- un circuit 1 électrique d'alimentation électrique du module 2 radio qui permet de couper l'alimentation du module radio lorsque l'aéronef est en vol.

Un état de l'aéronef est par exemple, en vol, au sol, etc. Lorsque l'aéronef est au sol des signaux électriques discrets indiquant que l'aéronef a atterri sont par exemple : un signal indiquant l'existence d'un poids de l'aéronef sur les roues, ou bien un signal indiquant que les portes de l'aéronef sont ouvertes.

Le circuit électrique d'alimentation peut être modélisé par un interrupteur commandé par une fonction logique des signaux électriques discrets (voir la figure 1).

On précise que l'on entend par fonction logique une série d'opérations logiques à une ou plusieurs variables. Des fonctions logiques connues sont : ET (en anglais, « AND »), OU (en anglais, « OR »), OU exclusif (en anglais, « XOR »), etc.

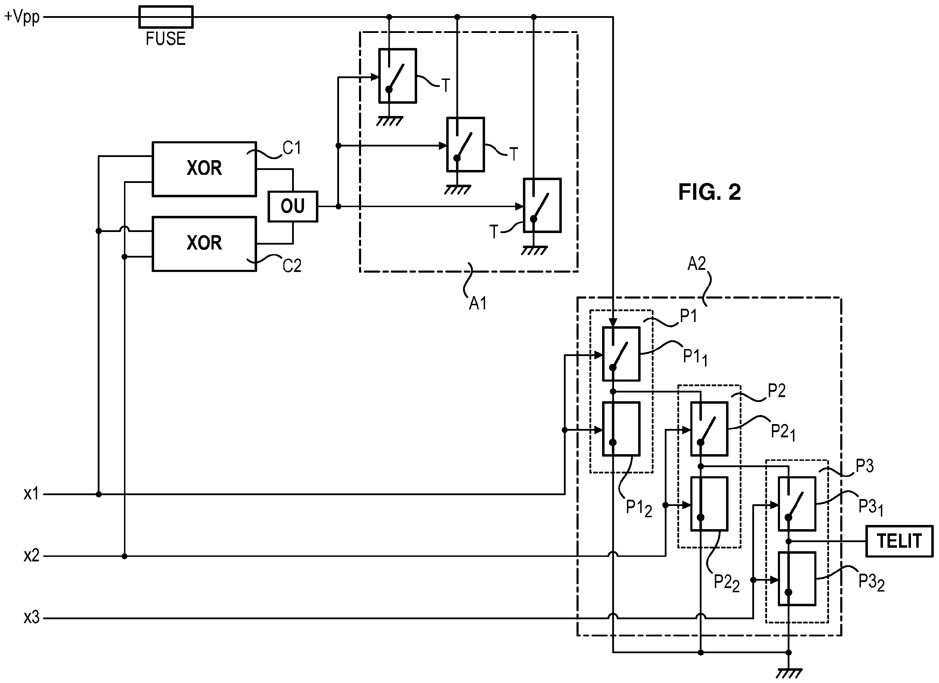

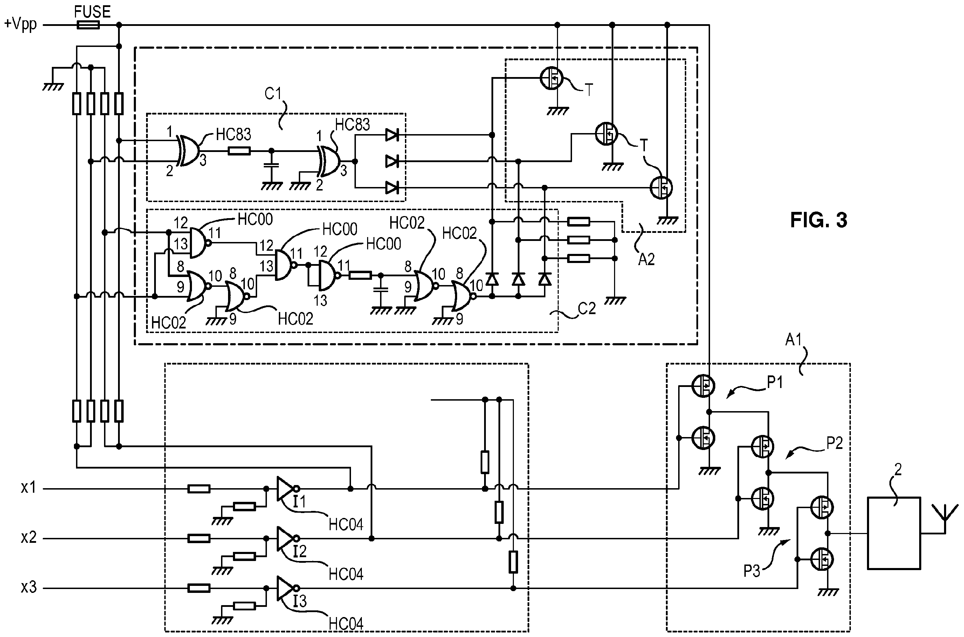

En relation avec la figure 2, le circuit 1 électrique reçoit en entrée au moins deux signaux électriques discrets, de préférence trois signaux électriques discrets x1, x2, x3, et comprend une source de tension +Vpp. Les valeurs des signaux électriques discrets conditionnent l'alimentation électrique du module 2 radio. En l'occurrence, dans le mode de réalisation des figures 2 et 3, les signaux électriques discrets doivent tous être égaux à 1 pour que le module 2 radio soit alimenté.

Bien entendu, on peut envisager un circuit électrique recevant en entrée un nombre plus élevé de signaux électriques discrets.

Le circuit électrique permet en fonctionnement normal d'alimenter l'alimentation électrique de l'équipement électrique 2 en fonction des valeurs des signaux électriques discrets.

On considère dans ce qui suit les valeurs logiques des signaux électriques discrets. En particulier, on considère qu'un signal électrique discret présente un état haut, c'est-à-dire une valeur logique '1' s'il traduit une condition selon laquelle l'équipement électrique peut être alimenté (par exemple, si l'aéronef a atterri) et qu'il est présente un état bas, c'est-à-dire une valeur logique '0' s'il traduit une condition selon laquelle l'équipement électrique ne doit pas être alimenté.

En relation avec les figures 2 et 3, on considère que les signaux électriques discrets doivent tous les trois êtres à l'état haut si l'équipement électrique 2 doit être alimenté.

Comme cela sera décrit dans ce qui suit, si un seul composant est utilisé pour tester les valeurs des signaux discrets ce dernier présente une probabilité de défaillance qui n'est pas négligeable de sorte que l'équipement électrique est alimenté alors qu'il ne devrait pas l'être.

Pour pallier ce problème, le circuit électrique présente plusieurs étages qui interagissent entre eux. A chaque étage, on peut prévenir une défaillance des composants qui présente un état incohérent avec les signaux discrets.

Ceci permet de diminuer la probabilité d'alimenter l'équipement électrique alors qu'il ne devrait pas l'être.

En effet, la probabilité de défaillance du circuit doit être de l'ordre de 10⁻⁹ alors qu'un composant électronique seul a une probabilité de défaillance de l'ordre de 10⁻⁶.

Le circuit électrique comprend deux modules de coupure de l'alimentation électrique A1, A2 montés en série, chaque module étant commandé en fonction des valeurs des signaux électriques discrets.

Les modules de coupure A1, A2 sont connectés entre la source de tension +Vpp et l'équipement 2 électrique.

Avantageusement, les deux modules A1, A2 de coupure de l'alimentation électrique présentent des structures électroniques différentes, de manière à vérifier les valeurs des signaux électriques discrets, par des moyens différents donc pas susceptibles de tomber en panne de manière identique, et ainsi diminuer la probabilité d'alimentation de l'équipement électrique par erreur.

Le circuit électrique comprend en outre deux modules de comparaison C1, C2 des signaux électriques discrets disposés en parallèle. Les modules de comparaison reçoivent en entrée des signaux électriques discrets, la sortie des modules étant un signal électrique présentant un état haut ('1') ou un état bas ('0').

### Premier module de coupure de l'alimentation

L'un des modules de coupure de l'alimentation, avantageusement le module A1 disposé le plus en amont, est commandé par les signaux électriques de sortie des modules de comparaisons C1, C2 des signaux électriques discrets.

Ce module A1 de coupure de l'alimentation comprend trois interrupteurs T en parallèles, branchés entre la sortie de la source de tension d'alimentation +Vpp et la masse. Ces interrupteurs T sont avantageusement des transistors de type CMOS.

Ces trois interrupteurs T reçoivent en entrée le même signal, qui est une fonction logique des signaux électriques de sortie des modules de comparaisons C1, C2 des signaux électriques discrets, avantageusement la fonction logique OU. Le signal électrique issu du module de comparaison est un signal logique présentant un état haut ('1') ou un état bas ('0').

La redondance des interrupteurs permet, dans le cas d'une défaillance de l'un des interrupteurs T, le maintien du bon fonctionnement du module A1 de coupure.

En référence à la figure 3, les interrupteurs sont avantageusement des transistors de type CMOS tels que :
- s'ils sont commandés par un signal à 1, les transistors sont fermés,
- s'ils sont commandés par un signal à 0, ils sont ouverts.

La fermeture de l'un des interrupteurs lorsqu'il reçoit en entrée un signal électrique à l'état haut ('1') isole l'équipement électrique 2 de la source de tension +Vpp et provoque un court-circuit. Le circuit 1 comprend alors avantageusement un fusible FUSE, permettant d'isoler la source de tension des autres éléments du circuit en cas de court-circuit.

De retour à la figure 2, les modules de comparaisons C1, C2 des valeurs des signaux électriques discrets mettent tous deux en oeuvre la fonction logique OU exclusif, ou XOR entre deux signaux électriques discrets x1 et x2.

Avantageusement, les modules C1, C2 de comparaisons présentent une structure électronique différente pour mettre en oeuvre cette fonction logique, de manière à éliminer les modes de défaillance communs et ainsi créer une redondance d'informations plus fiable que si la fonction logique était calculée de manière identique.

Par exemple, la fonction logique peut être réalisée dans l'un des modules, en l'occurrence dans le module C1, par une logique positive, et dans l'autre module, en l'occurrence le module C2, par une logique négative.

Plus précisément, le module C1 comprend une première porte logique « OU exclusif» entre les deux signaux électriques discrets x1, x2, dont la sortie est filtrée par un filtre passe-bas de type RC, la sortie filtrée étant une entrée d'une deuxième porte logique « OU exclusif », dont l'autre entrée est reliée à la masse.

Le module C2 quant à lui, comprend une porte logique « non ET » et une porte logique « non OU » en parallèle, chacune ayant pour entrées les deux signaux électriques discrets. La sortie de la porte logique « non OU » est une entrée d'une autre porte logique « non OU » dont l'autre entrée est reliée à la masse.

La sortie de la porte logique « non ET » constitue une entrée d'une nouvelle porte logique « non ET », dont l'autre entrée est la sortie de la deuxième porte logique « non OU ».

La sortie de la deuxième porte logique « non ET » est ensuite dédoublée afin de constituer les deux entrées d'une troisième porte logique « non ET ». La sortie de cette porte est filtrée par un filtre passe-bas de type RC, la sortie filtrée constituant une entrée d'une troisième porte « non OU », dont la deuxième entrée est reliée à la masse.

Enfin, la sortie de la troisième porte « non OU » est elle-même l'entrée d'une quatrième porte « non OU » dont la deuxième entrée est reliée à la masse.

Chaque sortie de l'un des modules est détriplée pour être comparée à la sortie de l'autre module, la fonction logique OU en sortie des modules n'étant pas représentée sur la figure.

Comme on l'a dit précédemment, dans le cas présent les signaux électriques discrets doivent tous être à l'état haut ('1') pour autoriser l'alimentation de l'équipement 2 électrique par la source de tension.

De manière non limitative, chaque signal électrique discret peut être inversé initialement par un inverseur I1, I2, avant d'alimenter les modules de comparaison C1, C2 (voir la figure 3).

La structure précédemment décrite des modules de comparaisons C1, C2, permet d'obtenir le fonctionnement suivant :
- si les deux signaux électriques discrets x1, x2 sont tous les deux à l'état haut ('1') ou tous les deux à l'état bas ('0'), les modules de comparaison C1, C2 délivrent tous les deux un signal électrique à l'état bas ('0'), de sorte que tous les transistors T sont ouverts, et ne coupent pas l'alimentation de l'équipement électrique.
- Si l'un des signal électrique discret est à l'état haut ('1') et l'autre à l'état bas ('0'), les modules C1 et C2 délivrent tous deux un signal elctrique à l'état haut ('1'), de sorte que tous les transistors sont fermés, générant un court-circuit et coupant l'alimentation du module TELIT.

Si une défaillance dans un composant de l'un ou l'autre des modules de comparaison C1, C2 génère une divergence entre les signaux de sortie des modules de comparaisons C1 et C2, chaque transistor T reçoit un signal électrique à l'état haut ('1'), générant ainsi un court-circuit et coupant l'alimentation de l'équipement 2 électrique.

Comme on l'aura compris, un court-circuit est généré en cas de divergence entre les signaux issus des modules de comparaison C1, C2. Divergence provoquée soit par le fait que les signaux électriques discrets sont différents soit par une défaillance des composants des modules de comparaison.

### Second module de coupure de l'alimentation

Sur la figure 2, le second module de coupure A2 du circuit 1 comprend autant de paires d'interrupteurs successives qu'il y a de signaux électriques discrets en entrée du circuit. En l'occurrence, il comprend trois paires P1, P2, P3 d'interrupteurs successives.

Chaque paire d'interrupteur Pi comprend deux interrupteurs Pi₁, Pi₂ en série, et chaque paire à partir de la seconde est montée en parallèle entre la sortie du premier interrupteur de la paire disposée en amont, et la masse. La première paire reçoit en entrée la tension d'alimentation +Vpp, si celle-ci n'a pas été coupée par le premier module de coupure A1 situé en amont.

Chaque interrupteur est avantageusement réalisé par un transistor de type CMOS commandé par une fonction d'un discret xi correspondant, de sorte que, si le discret xi présente une valeur conforme à la valeur qui commande l'alimentation de l'équipement 2, le premier interrupteur est passant, et le second interrupteur est ouvert.

Dans le cas illustré sur la figure 2, le module A2 de coupure autorise l'alimentation de l'équipement électrique quand les signaux électriques discrets sont à l'état haut ('1'), il faut que le premier transistor de chaque paire soit passant lorsqu'il est commandé par une entrée à l'état bas ('1'), et que le second soit alors ouvert.

Le module de coupure A2 contrôle donc la valeur de chaque signal électrique discret xi, et autorise l'alimentation de l'équipement électrique quand tous les discrets présentent la valeur autorisant la commande de l'alimentation de l'équipement électrique.

En revanche, si l'un des signaux électriques discrets n'est pas conforme à la valeur requise pour autoriser l'alimentation de l'équipement, le premier interrupteur de la paire correspondante s'ouvre pour bloquer l'alimentation.

En outre, en cas de défaillance de l'un des composants du module A2 de coupure de l'alimentation, par exemple si un interrupteur P1 est fermé au lieu d'être ouvert, la cascade de paires d'interrupteurs permet d'empêcher que le module soit alimenté.

De plus dans l'association des paires Pi1 et Pi2, lorsque Pi1 présente une défaillance en mode « Ouvert permanent », empêche que l'équipement électrique soit alimenté quel que soit la commande des signaux électriques discrets x1, x2 ou x3. A l'inverse lorsque le Pi1 présente une défaillance en mode « fermé permanent », et lorsque les signaux électriques discrets x1, x2 ou x3 seront en position de ne pas alimenter l'équipement électrique, alors les Pi2 seront commandés passant et généreront un court-circuit qui détruira le fusible FUSE, isolant l'équipement électrique de la source d'alimentation.

Il résulte de ce circuit électronique 1 que la défaillance de l'un des composants du circuit n'entraîne pas l'alimentation du module par la source de tension.

## Revendications

1. Circuit électrique adapté pour couper une alimentation électrique d'un équipement électrique, le circuit comprenant une source de tension d'alimentation de l'équipement électrique, et ayant en outre pour entrées au moins deux signaux électriques discrets (x₁, x₂, x₃) dont les valeurs conditionnent la coupure de l'alimentation électrique de l'équipement,
le circuit électrique étant **caractérisé en ce qu'**il comprend :
- au moins deux modules (A1, A2) de coupure de l'alimentation électrique montés en série, connectés entre la source de tension et l'équipement électrique, chaque module de coupure de l'alimentation électrique étant commandé en fonction des valeurs des signaux électriques discrets, et
- au moins deux modules (C1, C2) de comparaisons des signaux électriques discrets en parallèle,
dans lequel au moins un des modules de coupure (A1, A2) de l'alimentation électrique est commandé par les sorties des modules (C1, C2) de comparaisons des signaux discrets.

2. Circuit électrique selon la revendication 1, dans lequel le module de coupure (A1) de l'alimentation électrique commandé par les sorties des modules de comparaisons des signaux discrets est adapté pour générer un court-circuit en cas de divergence entre les signaux issus des modules de comparaisons (C1, C2) des signaux électriques discrets.

3. Circuit électrique selon la revendication 2, comprenant en outre au moins un fusible (FUSE) pour en cas de court-circuit isoler la source de tension des éléments du circuit.

4. Circuit électrique selon l'une des revendications précédentes, dans lequel les modules de coupure de l'alimentation électrique présentent des structures électroniques différentes.

5. Circuit électrique selon la revendication précédente, comprenant trois paires (P1, P2, P3) d'interrupteurs successives, chaque paire d'interrupteurs comprenant deux interrupteurs (P1₁, P1₂, P2₁, P2₂, P3₁, P3₂) montés en série, chaque paire d'interrupteurs étant montée en parallèle entre la sortie du premier interrupteur de la paire en amont et la masse, et dans lequel les interrupteurs de chaque paire sont commandés par une fonction d'un signal électrique discret, et fonctionnent de manière opposée l'un par rapport à l'autre en fonction de la commande.

6. Circuit électrique selon la revendication 5, dans lequel les paires d'interrupteurs sont adaptées pour provoquer un court-circuit dès lors qu'un interrupteur d'au moins une paire présente une défaillance en mode « conducteur permanent ».

7. Circuit électrique selon l'une des revendications précédentes, dans lequel le module (A1) de coupure de l'alimentation électrique commandé par les sorties des modules de comparaisons des signaux discrets comprend trois interrupteurs (T) montés en parallèle entre la source de tension et la masse, chaque interrupteur étant commandé par une fonction logique des signaux électriques de sortie des modules de comparaisons des signaux électriques discrets.

8. Circuit électrique selon la revendication précédente, dans lequel la fonction logique des signaux électriques de sortie des modules de comparaisons des signaux électriques discrets est une fonction logique OU.

9. Circuit électrique selon l'une des revendications précédentes, dans lequel les modules (C1, C2) de comparaisons des signaux électriques discrets présentent des structures électroniques différentes, adaptées pour mettre en oeuvre la fonction logique OU exclusif sur les valeurs des signaux électriques discrets en entrée, la fonction logique OU exclusif étant de préférence réalisée en logique négative ou positive.

10. Système d'acquisition, de traitement et de communication de données avioniques comprenant un circuit électrique selon l'une des revendications précédentes.

## Patentansprüche

1. Elektrische Schaltung, die angepasst ist zum Abschalten einer elektrischen Stromversorgung einer elektrischen Ausrüstung, wobei die Schaltung eine Stromversorgungsspannungsquelle der elektrischen Ausrüstung umfasst, und ferner als Eingänge mindestens zwei diskrete elektrische Signale (x₁, x₂, x₃) aufweist, deren Werte das Abschalten der elektrischen Stromversorgung der Ausrüstung bedingen,
wobei die elektrische Schaltung **dadurch gekennzeichnet ist, dass** sie Folgendes umfasst:
- mindestes zwei Module (A1, A2) zum Abschalten der elektrischen Stromversorgung, die in Reihe geschaltet sind, zwischen der Spannungsquelle und der elektrischen Ausrüstung verbunden sind, wobei jedes Modul zum Abschalten der elektrischen Stromversorgung in Abhängigkeit von den Werten der diskreten elektrischen Signale gesteuert wird, und
- mindestens zwei parallel geschaltete Module (C1, C2) für Vergleiche der diskreten elektrischen Signale,
wobei mindestens eines der Module (A1, A2) zum Abschalten der elektrischen Stromversorgung durch die Ausgänge der Module (C1, C2) für Vergleiche der diskreten Signale gesteuert wird.

2. Elektrische Schaltung nach Anspruch 1, wobei das Modul (A1) zum Abschalten der elektrischen Stromversorgung, das durch die Ausgänge der Module für Vergleiche der diskreten Signale gesteuert wird, angepasst ist, um im Fall einer Abweichung zwischen den Signalen, die von den Modulen (C1, C2) für Vergleiche der diskreten elektrischen Signale stammen, einen Kurzschluss zu erzeugen.

3. Elektrische Schaltung nach Anspruch 2, die ferner mindestens eine Schmelzsicherung (FUSE) umfasst, um im Fall eines Kurzschlusses die Spannungsquelle von den Elementen der Schaltung zu isolieren.

4. Elektrische Schaltung nach einem der vorhergehenden Ansprüche, wobei die Module zum Abschalten der elektrischen Stromversorgung unterschiedliche elektronische Strukturen aufweisen.

5. Elektrische Schaltung nach dem vorhergehenden Anspruch, die drei Paare (P1, P2, P3) von aufeinanderfolgenden Schaltern umfasst, wobei jedes Paar von Schaltern zwei Schalter (P1₁, P1₂, P2₁, P2₂, P3₁, P3₂) umfasst, die in Reihe geschaltet sind, wobei jedes Paar von Schaltern zwischen dem Ausgang des ersten Schalters des vorgeschalteten Paares und der Masse parallel geschaltet ist, und wobei die Schalter von jedem Paar durch eine Funktion eines diskreten elektrischen Signals gesteuert werden und in Abhängigkeit von der Steuerung auf zueinander entgegengesetzte Weise wirken.

6. Elektrische Schaltung nach Anspruch 5, wobei die Paare von Schaltern angepasst sind, um einen Kurzschluss auszulösen, sobald ein Schalter von mindestens einem Paar eine Störung im "Dauerleitermodus" aufweist.

7. Elektrische Schaltung nach einem der vorhergehenden Ansprüche, wobei das Modul (A1) zum Abschalten der elektrischen Stromversorgung, die durch die Ausgänge der Module für Vergleiche der diskreten Signale gesteuert wird, drei Schalter (T) umfasst, die zwischen der Spannungsquelle und der Masse parallel geschaltet sind, wobei jeder Schalter durch eine logische Funktion der elektrischen Ausgangssignale der Module für Vergleiche der diskreten elektrischen Signale gesteuert wird.

8. Elektrische Schaltung nach dem vorhergehenden Anspruch, wobei die logische Funktion der elektrischen Ausgangssignale der Module für Vergleiche der diskreten elektrischen Signale eine logische ODER-Funktion ist.

9. Elektrische Schaltung nach einem der vorhergehenden Ansprüche, wobei die Module (C1, C2) für Vergleiche diskreter elektrischer Signale unterschiedliche elektronische Strukturen aufweisen, die angepasst sind, um die logische Exklusiv-ODER-Funktion auf den Werten der diskreten elektrischen Eingangssignale durchzuführen, wobei die logische Exklusiv-ODER-Funktion vorzugsweise als negative oder positive Logik ausgeführt ist.

10. System zur Erfassung, Verarbeitung und Kommunikation von Luftfahrtelektronikdaten, das eine elektrische Schaltung nach einem der vorhergehenden Ansprüche umfasst.

## Claims

1. An electrical circuit suitable for cutting off an electric power supply to electrical equipment, the circuit comprising a voltage source supplying the electrical equipment, and furthermore having for inputs at least two discrete electrical signals (x₁, x₂, x₃), the values of which determine the cutting off of the electrical power supply to the equipment,
the electrical circuit being **characterised in that** it comprises:
- at least two modules (A1, A2) for cutting off the electric power supply connected in series, connected between the voltage source and the electrical equipment, each module for cutting off the electric power supply being controlled according to the values of the discrete electrical signals, and
- at least two modules (C1, C2) for comparing the discrete electrical signals in parallel,
wherein at least one of the modules (A1, A2) cutting off the electric power supply is controlled by the outputs of the modules (C1, C2) comparing the discrete signals.

2. The electrical circuit according to claim 1, wherein the module (A1) cutting off the electric power supply controlled by the outputs of the modules comparing the discrete signals is suitable for generating a short-circuit in the event of divergence between the signals issuing from the modules (C1, C2) comparing the discrete electrical signals.

3. The electrical circuit according to claim 2, further comprising at least one fuse (FUSE) in the event of a short-circuit, isolating the voltage source from the elements of the circuit.

4. The electrical circuit according to one of the preceding claims, wherein the modules cutting off the electric power supply have different electronic structures.

5. The electrical circuit according to the preceding claim, comprising three successive pairs of switches (P1, P2, P3), each pair of switches comprising two switches (P1₁, P1₂, P2₁, P2₂, P3₁, P3₂) connected in series, each pair of switches being connected in parallel between the output of the first switch in the upstream pair and the ground, and wherein the switches of each pair are controlled by a function of a discrete electrical signal, and functioning in opposite ways with respect to each other according to the command.

6. The electrical circuit according to claim 5, wherein the pairs of switches are suitable for causing a short-circuit as soon as a switch in at least one pair has a fault in "permanent conductor" mode.

7. The electrical circuit according to one of the preceding claims, wherein the module (A1) cutting off the electric power supply controlled by the outputs of the modules comparing the discrete signals comprises three switches (T) connected in parallel between the voltage source and the ground, each switch being controlled by a logic function of the electrical output signals of the modules comparing the discrete electrical signals.

8. The electrical circuit according to the preceding claim, wherein the logic function of the electrical output signals of the modules comparing the discrete electrical signals is an OR logic function.

9. The electrical circuit according to one of the preceding claims, wherein the modules (C1, C2) comparing the discrete electrical signals have different electronic structures, suitable for implementing the exclusive OR logic function on the values of the discrete electrical signals input, the exclusive OR logic function preferably being implemented in negative or positive logic.

10. A system for acquiring, processing and communicating avionic data, comprising an electrical circuit according to one of the preceding claims.
